(19) Europäisches Patentamt
European Patent Office
Office européen des brevets

(11) Publication number: **0 480 243 A1**

# (12) EUROPEAN PATENT APPLICATION

(21) Application number: **91116308.7**

(22) Date of filing: **25.09.91**

(51) Int. Cl.[5]: **C02F 1/70**, C02F 1/72, C02F 1/64, C02F 9/00

(30) Priority: **10.10.90 FI 904979**

(43) Date of publication of application: **15.04.92 Bulletin 92/16**

(84) Designated Contracting States: **AT BE CH DE DK ES FR GB GR IT LI LU NL SE**

(71) Applicant: **WISER OY**
**PL 152**
**SF-04201 Kerava(FI)**

(72) Inventor: **Järvenpää, Viljo**
**Vellamontie 21 as.**
**SF-04200 Kerava(FI)**

(74) Representative: **Bühling, Gerhard, Dipl.-Chem. et al**
**Patentanwaltsbüro Tiedtke-Bühling-Kinne & Partner, Bavariaring 4**
**W-8000 München 2(DE)**

## (54) A method for purifying waste and/or drinking water.

(57) The invention relates to a method for purifying waste and/or drinking water of nitrates and/or nitrites. The nitrates and/or nitrites contained in the iron-bearing water to be purified or in water containing a metal to be subjected to other reduction/oxidation are reduced to gases to be removed from the system by supplying into the water to be purified a bisulphite solution or sulphur dioxide in such a way that the pH-value of the system remains in the range 2.0-6.5. The bisulphites, which have remained in the system after the reduction, and other sulphur compounds produced by the reduction are removed by precipitating them into sulphate or carbonate by supplying into the water oxygen and calcium hydroxide or carbonate or other hydroxide or carbonate and by maintaining the pH-value within the range 6.5-9.5.

EP 0 480 243 A1

The invention relates to a method for purifying waste and/or drinking water of nitrates and/or nitrites.

The invention also relates to the use of the purification method for purifying waste and/or drinking water of iron, manganese, heavy metals, mercuries and/of phosphates.

The purification of water of nitrates/nitrites (NO3-/NO2-) has previously been cumbersome, and it has mainly occurred biologically, i.e. by means of bacteria, which consume/eat oxygen. The bacteria then decompose e.g. nitrates, whereby nitrogen is released in a molecular form out of the liquid/water. The environment of such bacteria requires also other chemicals, and the environment has to contain e.g. carbon (organic components) and generally also phosphates. Creating and arranging such conditions especially at a drinking water purification plant is nearly impossible at least in Finland, where nearly constant temperature conditions should be arranged at the same time. This has resulted in that in Finland water intake plants, in which nitrates/nitrites have started to occur or which have been contaminated by them, have had to be abandoned, although other prerequisites for the water intake would have been good. It would thus be very important to find a solution, in which these detrimental components could be removed. Other disadvantages are that it has been difficult to control the water temperature for bacteria in Finland because of the varying seasons, and the result is also otherwise unsure, since the environment of bacteria requires an exact control and nutrient supply.

The purpose of the present invention is to provide a method, by means of which nitrite and nitrite compounds primarily occurring in water can be removed with a chemical treatment.

The purpose of the present invention is also to provide a method, which is more economical and requires only simple devices and a more secure result, as a biological method requires large plants and a more exact control for achieving a suitable environment for bacteria.

For reaching these objects, the inventive method is mainly characterized in that nitrates and/or nitrites contained in the iron-bearing water to be purified or in water containing a metal to be subjected to other reduction/oxidation are reduced to gases to be removed from the system by supplying into the water to be purified a bisulphite solution or sulphur dioxide in such a way that the pH-value of the system remains in the range 2.0-6.5, whereby the bisulphites, which have remained in the system after the reduction, and other sulphur compounds produced by the reduction are removed by precipitating them into sulphate or carbonate by supplying into the water oxygen and calcium hydroxide or carbonate or other hydroxide or carbonate and by maintaining the pH-value within the range 6.5-9.5.

The preferred embodiments of the invention have the characteristics defined in the subclaims.

Also other impurities leave the system in connection with the above-mentioned reduction and oxidation steps. It has for example been observed that mercury salts reduce to metallic mercury on the bottom of the container in the reduction step, and precipitates of various metals, also heavy metals, have been observed in connection with the oxidation step.

The invention has thus primarily provided a solution for solving the nitrite and nitrate problem by using a chemical treatment in such a way that the water entering the treatment is treated first in reducing and thereafter in oxidazing conditions, whereby the reducing conditions are most preferably realized by supplying into the water sulphur dioxide ($SO_2$-gas), which can be collected, when so desired, e.g. in connection with the purification of flue gases, and by maintaining the pH-value within a predetermined range. Alternatively, a solution already containing $HSO_3$-ions can be led into the water to be purified.

It has been realized in the invention to utilize the reducing properties of the sulphur dioxide gas. According to the invention, $SO_2$-gas is supplied in the reduction step into the water and the supply is controlled with respect to the pH-value so that it remains within suitable limits 2.0-6.5, most preferably within the range 4-6, preferably 5-6. When sulphur dioxide is led into water, the following reaction occurs, as is well known:

$$(1) \qquad SO_2 + H_2O <\text{-----}> H_2SO_3 \text{ (sulphurous acid).}$$

Accordingly, the water solutions of sulphur dioxide contain a sulphurous acid $H_2SO_3$. An acid-base system $H_2SO_3$ - $HSO_3$ - $SO_3$ occurs in the water solution of sulphur dioxide. When the gas supply is controlled so that the pH in the cell remains within the presented limits 2.0-6.5, preferably ca. 4.0-6.0 and most preferably 5.0, the solution is dominated by bisulphite:

$$(2) \qquad H_2SO_3 \text{ ----> } HSO_3 + H^+.$$

A bisulphite acid radical is an extremely active reducer, which creates such a reaction chain that various nitrogen containing gases, e.g. $NO_2$ (brown colour), NO (yellow colour) and possibly $N_2$ (colourless), have been observed in the reducting reactor as reaction products, which cause bubbles and turbidity in the reaction cell.

Since bisulphite is an extremely active reducer, practically all possible metal ions occurring in the solution are as extensively reduced as possible. For example ferrous salts are as $Fe^{++}$-ions, chrome salts as $Cr^{3+}$-ions and also manganese is as a $Mn^{++}$-ion. Possible mercury compounds reduce in this phase as a metallic mercury on the bottom of the container. It is known in chemical literature that the reduction of nitrates/nitrales in the system occurs e.g. by the action of ferroions, which go through the reduction

$$Fe^{3+} \text{--->} Fe^{2+}$$

and/or the corresponding metal ions act as reducers. With respect to all above-mentioned reactions, i.e. to the acid-base system and reduction reactions of sulphur dioxide, a reference is made to the textbook Holleman-Wiberg, "Lehrbuch der Anorganischen Chemie", Walter de Gruyter, Berlin, New York 1976, in which the reaction of sulphur dioxide in water has been described on page 330 and reducing properties, the reduction of $Fe^{3+}$ to $Fe^{2+}$ as well as the reduction of mercury to metallic mercury on page 331. On page 396 of said textbook is described the reduction of nitrite and nitrate to nitrogen monoxide (NO) by the action of $Fe^{2+}$-ions:

$$(3) \quad 3Fe^{2+} + NO_3 + 4H^+ \text{-->} NO + 3Fe^{3+} + 2H_2O$$

$$(4) \quad HNO_2 + Fe^{2+} + H^+ \text{-->} NO + Fe^{3+} + H_2O.$$

Some reaction of nitrite into nitrate and into nitrogen monoxide 3 $HNO_3$ + 2NO + $H_2O$ (p. 408) may also occur in the system.

If the water to be purified does not already contain ferrosalts or heavy metals similarly going through the reduction/oxidation for the reduction reaction, it is advantageous to add these to the system, since it has been observed that the e.g. the presence of ferroions produces a better reduction result of nitrates/nitrites acting themselves as a reducer in the manner described above. It is not quite evident whether bisulphate reduces nitrates/nitrites also directly, due to which we do not bind ourselves to the theory that the reduction would occur only by the action of the reactions (3) and (4).

In this phase, after the reduction, the system contains remainder bisulphites and other carbon compounds occurring as a product of the reduction, which have to be removed from the system, since the water is otherwise unfit for use.

This is performed in a second reactor in the oxidation step, whereby oxygen is dissolved in the system, preferably up to the saturation point. Calcium hydroxide $CA(OH)_2$, calcium carbonate $CaCO_3$ or other hydroxide or carbonate is also most preferably added to the supply flow and the pH-value is maintained in the range 6.5-7.5, whereby the following reactions occur:

(5) e.g. $Fe(HSO_3)_2$ + $Ca(OH)_2$ --- $CaSO_4$ precipitate + $FE^{++}$ + $2H_2O$

further oxidizing

(6) e.g. $FE^{++}$ + $H_2O$ + 1/2 $O_2$ ---- $FE^{+++}$ + $2OH^-$

(7) e.g. $FE^{+++}$ + 3 OH ---- $Fe(OH)_3$ precipitate.

In the oxidation step, calcium hydroxide is the most preferable substance to be added for forming precipitates. Gypsum (oxidized sulphite and neutralization with Ca-milk) is the final product, which is nearly water insoluble. Other hydroxides are possible, but most of them do not form precipitates, which can be filtered or in some other way sedimented. Many bases, e.g. KOH, NaOH, $Mg(OH)_2$, etc., produce soluble salts, whereby the sulphate acid remainder content increases in water, which is generally not recommen-

dable. $Ca(OH)_2$ can also be replaced with $CaCO_3$, i.e. the neutralization can also be realized as carbonate compounds of the chemicals concerned. The most advantageous is thus a Ca-ion, which is the most suitable as gypsum on the basis of the precipitate reaction.

If the water to be purified contains phosphates, they precipitate as phosphate precipitates, most preferably as an $FePO_3$-precipitate, which is filtered away. The forming of phosphate precipitates is dealt with is the publication "Abwassertechlogie, Entstehung, Ableitung, Behandlung, Analytik der Abwässer vom Institut Fresenius GmbH, Taunusstein-Neuhof W. FRESENTIUS UND W. SCHNEIDER und dem Forschungsinstitut für Wassertechnologie und der RWTH Aachen (FiW), B. BÖHNKE UND K. PÖPPINGHAUS".

In addition to the above-mentioned advantageousness, the advantages of the invention also include that it can be used for removing also other impurities than nitrates and nitrites, which are purified so to say "into the bargain". In the reduction step, the reactions (3)-(4) actually utilize iron impurities in the water, since they promote the reduction. Iron is thus removed in connection with the removal of sulphur compounds in the oxidation step (reactions (6)-(7). Also possible phosphates are removed in the oxidation step.

Accordingly, iron, phosphates as well sulphates are removed as precipitates. Also other heavy metals are removed in said oxidation and reduction steps primarily as hydroxides, manganese also as $MnO_2$.

The invention is next described in detail with reference to the figure, which is not intended to limit the invention to its details.

Fig. 1 suitably shows a self-sucking rotor mixer, which sucks the supplied SO2-gas after the batching into the water present in the mixer/container. The water to be purified in the device is guided in its entirety such that all water enters the rotor mixer and thus homogenizes and mixes with the gas, whereby the reactions of bisulphite are ensured. Fig. A shows a reducing portion, in which the SO2-gas 4 is sucked through a batching valve 3 via a rotating shaft to a rotor 5, which mixes the gas uniformly in the water as completely as possible at the same time as the rotor mixes the total quantity of liquid/water in the container 1. A meter 7 measures the pH-value and controls the SO2-gas control valve 3, when needed. In this embodiment, the raw water 2 entering the treatment is completely led into the mixer rotor. The motor 6 rotates the rotor shalt. From the reducer unit the water flows to the next oxidation step B as a flow 20, in this embodiment into a container 10 provided with a cone. There a rotor 25 mixes, in addition to the supply 20, also a lime milk flow 28 controlled by a valve 23, which is in turn possibly controlled by a pH-sensor 27. In this embodiment, the rotor 25 sucks air through the shaft as a flow 24. The quantity of air can be so large that the precipitates forming better rise up as foam into a flow 29a and part of it descends into a flow 29. In this embodiment, a motor 26 rotates the shaft of the rotor 25. The pure, oxygen-rich and neutral water leaves the treatment unit as a flow 30 from the B-step. This water can also go through sand filtration before it is pumped into the distribution network.

The delay in the reducing conditions is to be made such that the chemical reactions can occur. The reduced water is then led in the next step into oxidizing conditions also by ensuring the inlet such that the oxygen content approaches the saturation point in the total quantity of the liquid. At the same time, lime milk ($Ca(OH)_2$-solution) is most preferably added to the mixing conditions in order to make the pH-value rise to the presented level. Said reactions occur in such conditions and the precipitates can be taken either from the top or from the bottom of the container.

The presented reactions and mechanical water treatments are simple to realize in practise. It is preferable to use in the reducing conditions a closed container, and the entry of air thereto is to be prevented. This should be done to prevent the occurrence of oxidation on the water surface, but also to make the efficiency of the $SO_2$-gas as good as possible.

The oxidizing conditions can in contrast be performed in open conditions. It is essential that the mixing is sufficient and that the formed precipitates do not stop the process.

The chemical reactions are the faster the higher the temperature is. It is thus preferable to make the arrangements such that as warm conditions as possible are continuously maintained. This results in small container volumes, i.e. the delays can be made as short as possible.

The inventive solution is shown with chemical formulas, which illustrate the reactions. The given pH-ranges are only directive, especially in the reduction step, but this also concerns the oxidation unit. The sulphurous acid ($H_2SO_3$) is in the solution partly dissociated as a bisulphite acid radical and nitrogen ions. The dissociation degree is at its best within the range indicated. Furthermore, too low a pH-value requires a higher neutralization degree.

In the oxidation step, too high a pH-value possibly causes the separation of lime in the piping (especially in the parts of a copper piping) and also when boiling water. It is therefore purposeful to select a reasonable limit, by means of which the removal of iron can just be achieved.

In certain cases, it is purposeful to ensure/clarify that there is sufficiently iron in the water either originally or added to the water in order to make a ferro/reffi reaction promote the reduction reactions.

It is evident that this method is applicable both to the purification of waste water and to the removal of nitrates/nitrites from drinking waters.

Finally, some examples of embodiments are presented, in which the inventive method and analysis results have been utilized.

**Examples 1-2**

Several experiments have been performed of the method. The experiments were made in a reaction flask (V = 800 ml) by using a magnetic mixer and by leading the reaction gas through a sinter rod. The testing temperature was 19° C. The acidities were measured by means of a continuous display.

I Before the purification, the water to be purified contained 66 mg/l of $NaNO_3$ and $FeSO_4$. The $7H_2$-content was 89.5 mg/l and after the purification 8.6 mg/l of $NaNO_3$. Reddish brown gas occurred during the reduction step, when the pH-value was Ca. 4.
The quantity of the nitrates removed was thus ca. 85%.

II The sample contained ca. 600 mg/l of $NaNO_3$ and ca. 88 mg/l of $FeSO_4$. There were no signs of a reaction, since the pH-value rapidly fell to 1.9. Measuring the results was difficult because the concentration considerably exceeded the scale.

**Examples 3-4**

In the examples, the solution was run out too rapidly with the $SO_2$-gas when the pH-value was ca 2.0-1.9, whereby the reaction was low. The iron sulphate content was nearly the same as the $NaNO_3$-content.

III Sample 36.25 mg/l of $NaNO_3$ + 36.5 mg/l of $FeSO_4 \cdot 7\ H_2O$. The quantity of the nitrates removed was ca. 6%.

IV Sample 130 mg/l of $NaNO_3$ + 133mg/l of $FeSO_4 \cdot 7\ H_2O$. The quantity of the nitrates removed was 153%.

**Examples 5-6**

Also another catalyst, cobalt salt ($CoCO_3$), was used in the examples. These experiments also clearly showed that when the pH-value was dropped more slowly, a clear colour reaction to brown occurred within the pH-range of ca. 4, which indicated the occurrence of a nitrogen containing gas ($NO_2$).

V Sample 114 mg/l of $NaNO_3$ + 94 mg/l of $FeSO_4 \cdot 7\ H_2O$. The quantity of the nitrates removed was ca. 25%.

VI Sample 88.6 mg/l of $NaNO_3$ + 130 mg/l of $FeSO_4 \cdot 7\ H_2O$. The quantity of the nitrates removed was ca, 25%.

The testing arrangements were made at the Metallurgical Department of the Technical University, at the laboratory for Corrosion.

The invention relates to a method for purifying waste and/or drinking water of nitrates and/or nitrites. The nitrates and/or nitrites contained in the iron-bearing water to be purified or in water containing a metal to be subjected to other reduction/oxidation are reduced to gases to be removed from the system by supplying into the water to be purified a bisulphite solution or sulphur dioxide in such a way that the pH-value of the system remains in the range 2.0-6.5. The bisulphites, which have remained in the system after the reduction, and other sulphur compounds produced by the reduction are removed by precipitating them into sulphate or carbonate by supplying into the water oxygen and calcium hydroxide or carbonate or other hydroxide or carbonate and by maintaining the pH-value within the range 6.5-9.5.

**Claims**

**1.** A method for purifying waste and/or drinking water of nitrates and/or nitrites, characterized in that nitrates and/or nitrites contained in the iron-bearing water to be purified or in water containing a metal to be subjected to other reduction/oxidation are reduced to gases to be removed from the system by supplying into the water to be purified a bisulphite solution or sulphur dioxide in such a way that the pH-value of the system remains in the range 2.0-6.5, whereby the bisulphites, which have remained in the system after the reduction, and other sulphur compounds produced by the reduction are removed by precipitating them into sulphate or carbonate by supplying into the water oxygen and calcium hydroxide or carbonate or other hydroxide or carbonate and by maintaining the pH-value within the range 6.5-9.5.

2. A method according to Claim 1, **characterized** in that in the reduction step the pH-value is preferably 4-6, most preferably 5-6 and in the oxidation step preferably 6.5-7.5.

3. A method according to Claim 1, **characterized** in that ferrosalts or other heavy-metal salts are added to the system for promoting the reduction, especially if the water to be treated does not contain them.

4. A method according to Claim 1 or 2, **characterized** in that oxygen is added in the oxidation step up to the saturation point.

5. Use of the method according to Claim 1 for purifying waste and/or drinking water of iron, **characterized** in that the iron contained in the ferrosalts is oxidized in said oxidation step to ferri-ions ($Fe^{3+}$) and precipitated as ferrihydroxide (Fe(OH)3).

6. Use of the method according to Claim 1 for purifying waste and/or drinking water of heavy metals, **characterized** in that they precipitate as hydroxide of the heavy metal concerned in connection with said oxidation step.

7. Use of the method according to Claim 1 for purifying waste and/or drinking water of phosphates, **characterized** in that the phosphates are removed from the system as phosphates, preferably $FePO_3$, by precipitating in said oxidation step.

8. Use of the method according to Claim 1 for purifying waste and/or drinking water of mercury, **characterized** in that in connection with said reduction step the mercury compounds reduce to a metallic mercury on the bottom of the container.

9. Use of the method according to Claim 1 for purifying waste and/or drinking water of manganese, **characterized** in that in connection with said oxidation step manganese precipitates as manganese hydroxide or oxide.

European
Patent Office

# EUROPEAN SEARCH REPORT

Application Number

**EP 91 11 6308**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WORLD PATENTS INDEX Section Ch, Week 7611, 30 January 1976 Derwent Publications Ltd., London, GB; Class D, AN 76-19842X<br>& JP-A-51 012 379 (MITSUBISHI CHEM IND KK) 30 January 1976<br>* abstract * * | 1-3 | C 02 F 1/70<br>C 02 F 1/72<br>C 02 F 1/64<br>C 02 F 9/00 |
| Y | DE-A-2 622 197 (H.HÖLTER)<br>* the whole document * * | 1,2 | |
| Y | WORLD PATENTS INDEX Week 7638, 7 August 1976 Derwent Publications Ltd., London, GB; AN 76-71424X<br>& JP-A-51 089 871 (NIPPON CHEM IND KK) 7 August 1976<br>* abstract * * | 2,3 | |
| A | ENVIRONMENTAL SCIENCE AND TECHNOLOGY. vol. 20, no. 11, December 1986, EASTON, PA US pages 1072 - 1080; D.CLIFFORD ET AL.: 'REMOVING DISSOLVED INORGANIC CONTAMINANTS FR0M WATER'<br>* page 1073, paragraph 5 *<br>* page 1074, paragraph 5 - page 1075, paragraph 2 * * | 5-7,9 | TECHNICAL FIELDS SEARCHED (Int. Cl.5) |
| A | DE-A-1 642 479 (FRIED.KRUPP GMBH) | 5,9 | C 02 F |

The present search report has been drawn up for all claims

| Place of search | Date of completion of search | Examiner |
|---|---|---|
| The Hague | 19 November 91 | GONZALEZ ARIAS M.L. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document